# EUROPEAN PATENT SPECIFICATION

(11) **EP 4 549 300 B1**
(45) Date of publication and mention of the grant of the patent: **22.07.2026**
(21) Application number: 23383108.0
(22) Date of filing: 30.10.2023
(51) Int. Cl.: B62K 21/06, B62J 11/13, F16C 35/073

(54) **BICYCLE COMPRESSION RING ASSEMBLY AND METHOD FOR INSTALLING SAID ASSEMBLY**
KOMPRESSIONSRINGANORDNUNG FÜR FAHRRAD UND VERFAHREN ZUR INSTALLATION DER BESAGTEN ANORDNUNG
ENSEMBLE ANNEAU DE COMPRESSION DE BICYCLETTE ET PROCÉDÉ D'INSTALLATION DUDIT ENSEMBLE

(43) Date of publication of application: 07.05.2025
(73) Proprietor: ORBEA, S. COOP., 48269 Mallabia (BIZKAIA) (ES)
(72) Inventor: AUZMENDI ARKARAZO, Beñat, 20740 Zestoa (ES); GARRIDO GÓMEZ, Iñaki, 20180 Oiartzun (ES)
(74) Representative: Cueto, Sénida

(56) References cited:
- DE-U1- 29 609 991
- TW-U- M 619 006
- US-A1- 2022 204 118

## Description

### Object of the invention

The present invention belongs to the field of bicycles, and more particularly to the elements used to join the fork and the frame of a bicycle.

A first aspect of the present invention is directed to an improved bicycle compression ring assembly with respect to the conventional compression rings.

A second aspect of the present invention is directed to a method to install the above mentioned compression ring assembly.

### State of the art

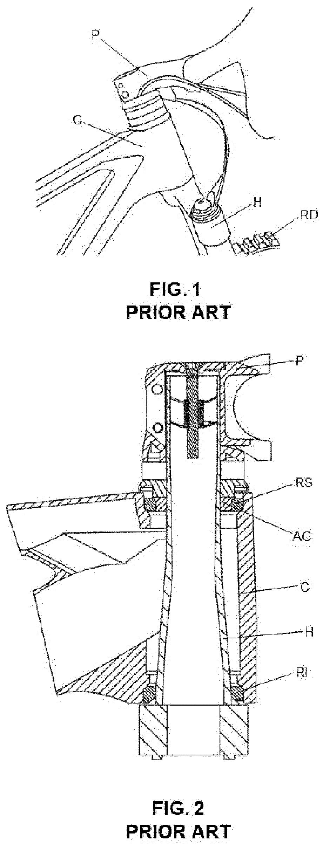

The direction system of a bicycle normally comprises a fork that rotates with respect to the frame. As shown in Fig. 1, the fork (H) comprises a head tube whose upper end is connected to the stem (P) and whose lower end divides into two arms between which the front wheel (RD) is provided. The tube of the fork (H) passes through the head tube of the frame (C) and it is connected thereto in a rotating manner by means of a number of elements usually referred to as *"headset".* The elements making up the direction are designed to prevent any clearance between the frame (C) and the tube of the fork (H) and, at the same time, allow for a substantially friction free rotation to ensure a suitably safe use of the bicycle.

Fig. 2 shows a longitudinal section of the direction of a conventional bicycle where the elements making up the direction are shown. The tube of the fork (H) passes through the inside of the head tube of the frame (C), being connected thereto by means of two bearings, respectively upper (RS) and lower (RI). In the case of the upper bearing (RS), the fixation to the frame (C) and fork (H) is carried out by friction, by compressing the outer race of the upper bearing (RS) against the frame (C) and the inner race of the upper bearing (RS), by means of an annular part known as *"compression ring"* (AC), against the fork (H). Thereto, the compression ring (AC) is shaped as an open ring having a conical wall functioning as a wedge, thereby ensuring a suitable compression force to prevent movement of the upper bearing (RS).

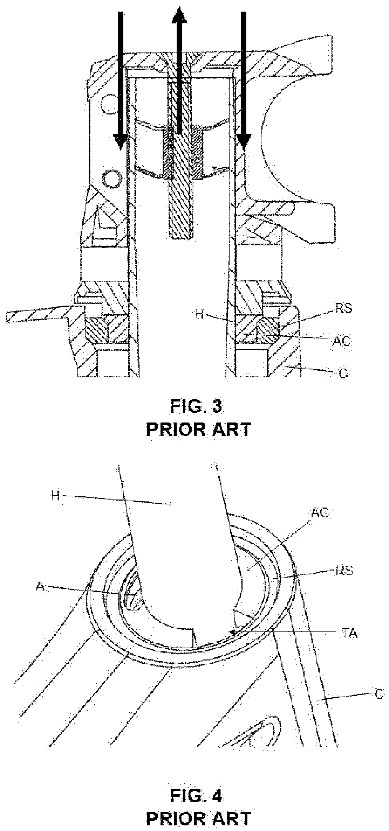

This configuration is shown in greater detail in the detail view of Fig. 3, where the forces applied to the assembly during the mounting process are also shown. As shown, a pre-charge is applied by essentially pushing the frame (C) downwards with respect to the fork (H), thereby introducing the compression ring (AC) in a wedge-like manner between the inner race of the upper bearing (RS) and the tube of the fork (H). The compression ring (AC) may also have openings (A) to allow for the introduction of cables in high end bicycles, as shown in the perspective view of Fig. 4. Fig. 4 also shows the open length (TA) of the compression ring (AC) allowing for it to slightly increase or reduce in diameter to fit in position.

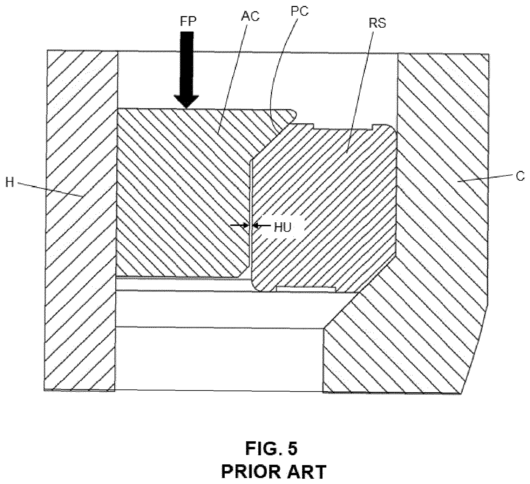

A drawback of this system is that the contact surface between the upper bearing (RS) and the compression ring (AC) is small. Indeed, the upper bearing (RS) and the compression ring (AC) usually only have a small length of conical wall (PC) in contact after the pre-charge force (FP) is applied. Fig. 5 shows that, upon applying the pre-charge force (FP), the compression ring (AC) slides with respect to the upper ring (RS) along the conical wall (PC), thereby slightly reducing its diameter, such that the vertical walls of both elements separate. Consequently, a gap (HU) appears between the vertical walls of both elements. The contact is reduced to the conical wall (PC), which has a length of approximately 2 millimetres.

While this solution is suitable for the majority of situations, when additional elements causing a play in the direction set are added, for example, when a fork angle adjustment system is implemented in the frame, an instability may arise that causes noise and play.

For this reason, there is a need in this field for an improved compression ring capable of ensuring a sufficiently firm and stable fixation of the upper bearing.

Document TWM619006U discloses an assembly for connecting a bearing between the fork tube and the frame of the bicycle having an outer ring lacking a circumferential opening.

### Brief description of the invention

The inventors of the present invention have solved the drawbacks mentioned above by means of a compression ring assembly formed by two rings, an inner ring and an outer ring respectively, fitting one into the other by means of complementary surfaces conical in shape. Thereby, the inner ring carries out a wedge-like function, compressing the outer ring against the bearing. Further, the outer ring has a cylindrical external surface, such that it contacts with the whole inner surface of the inner race of the bearing.

This solution dramatically increases the contact surface between the compression ring assembly of the invention and the inner race of the bearing, thereby improving the stability of the connection.

In the present document, terms such as *"upper", "lower"* and the like are interpreted according to the natural orientation of the bicycle during use, which is coincident with the orientation shown in the figures attached to this document.

In the present document, terms such as "inner", "outer" and the like are interpreted according to the radial direction referred to the tube of the fork, unless the context clearly indicates otherwise.

In this document, the term *"longitudinal"* refers to the longitudinal direction of the tube of the fork.

### First aspect: compression ring assembly

A first aspect of the present invention is directed to a bicycle compression ring assembly configured to connect a bearing of the direction of the bicycle between the fork tube and the frame. As mentioned above, this compression ring assembly replaces the conventional compression ring made of a single piece. The compression ring assembly of the present invention comprises the following elements:
a) Outer ring
   It is an open outer ring comprising an inner wall and an outer wall. The inner wall comprises at least one conical length. The outer wall comprises a cylindrical wall configured to abut against an inner race of the bicycle direction bearing.
b) Inner ring
   It is an open inner ring comprising an outer wall and an inner wall. The outer wall comprises at least one conical length. The inner wall comprises a cylindrical wall configured to abut against the outer surface of the fork tube.

These two rings are configured such that, when fitted in position, they exert a radially directed force compressing the inner ring against the fork tube and the outer ring against the bearing, filling the gap completely and making the tube, compression rings and bearing work as a single part. Thereto, the conical length of the outer wall of the inner ring and the conical length of the inner wall of the outer ring have essentially the same conicity. Thereby, when the assembly is mounted, the inner ring fits into the outer ring in a wedge-like manner and compresses the latter against the bearing.

Preferably, the angle of conicity of the conical length of the inner wall of the outer ring and of the conical length of the outer wall of the inner ring is between 20° and 30°. The inventors of the present application found out that this angle range is particularly well suited to ensure fitting of the outer ring into the inner ring and sliding of one over the other to reach the final mounting position.

In principle, both rings may be formed each as a single piece and, naturally, in both cases they have an open length for allowing their diameters to slightly change for suitably fitting in position. In that case, normally the whole outer wall of the inner ring and the whole inner wall of the outer ring are conical.

However, according to a particularly preferred embodiment of the invention, the inner ring is divided into a first portion and a second portion physically separated and configured to be installed in essentially diametrically opposing positions.

In that case, preferably the outer wall of the first portion of the inner ring is cylindrical and the inner wall of the length of the outer ring where said first portion of the inner ring fits is also cylindrical. More preferably, the outer wall of the second portion of the inner ring is conical and the inner wall of the length of the outer ring where said second portion fits is also conical.

Thereby, in this configuration, the second portion of the inner ring has a wedge-like function, compressing the assembly to firmly fix the bearing in question.

In any case, the rings making up the compression ring assembly disclosed herein may have an essentially constant transversal cross-section throughout their whole diameter. However, to provide space for the passage of cables towards the inside of the fork tube, the inner wall of the outer ring may comprise a first recess having a reduced thickness. Similarly, also to allow for the passage of cables towards the inside of the fork tube, the outer wall of the inner ring may comprise a second recess having a reduced thickness.

Further, by suitably choosing the radial positions with respect to the inner ring and the outer ring, it is possible to make the reduced thickness recess of one of them match the open length of the other. Thereby, a wider opening for the passage of cables is provided. Specifically, the rings may be provided such that the second recess of the inner ring and the first recess of the outer ring are provided in radial positions configured to match respectively the radial position of an open length of the outer ring and the radial position of an open length of the inner ring.

Furthermore, recesses and open lengths whose radial positions match may have similar radial extensions. Therefore, each opening for the passage of cables has an annular length shape having the largest possible size. Specifically, the second recess of the inner ring and the first recess of the outer ring may have radial extensions respectively matching the radial extension of the open length of the outer ring and the radial extension of the open length of the inner ring.

### Second aspect: installation method

A second aspect of the present invention is directed to a method for installing a bicycle compression ring assembly as disclosed in the previous paragraphs. This method mainly comprises the following steps:
1. Fitting the outer ring into the bearing such that the cylindrical outer wall of the outer ring contacts with the inner race of the bearing.
2. Introducing the inner ring into the outer ring in a longitudinal direction, such that the conical outer wall of said inner ring abuts against the conical inner wall of the outer ring.
3. Applying a pre-charge in a longitudinal direction onto the inner ring, such that said inner ring further enters into the outer ring and the sliding of the conical outer surface of the inner ring against the conical inner surface of the outer ring causes a radially outward oriented force compressing the outer ring against the inner race of the bearing.

According to a preferred embodiment of the invention, the method of the invention further comprises the step of making the position of the second recess of the inner ring match the open length of the outer ring and the position of the first recess of the outer ring with the open length of the inner ring.

### Brief description of the figures

The details of the invention are shown in the accompanying figures, which are not to be taken as limiting the scope of the invention:
Fig. 1 shows a view of the front portion of a bicycle according to the prior art.
Fig. 2 shows a longitudinal section of the direction of a bicycle according to the prior art.
Fig. 3 schematically shows the method for installing a conventional compression ring in a bicycle according to the prior art.
Fig. 4 shows a perspective view of the conventional compression ring installed in a bicycle according to the prior art.
Fig. 5 shows a longitudinal section showing the manner in which the conventional compression ring fits into the bearing of the direction of a bicycle according to the prior art.
Fig. 6 shows a longitudinal section showing a first embodiment of the compression ring assembly according to the present invention installed in a bicycle.
Fig. 7 shows a first embodiment of the compression ring assembly according to the present invention where the inner ring is made of a single part.
Fig. 8 shows a second embodiment of the compression ring assembly according to the present invention where the inner ring is formed by two parts.

### Detailed disclosure of the invention

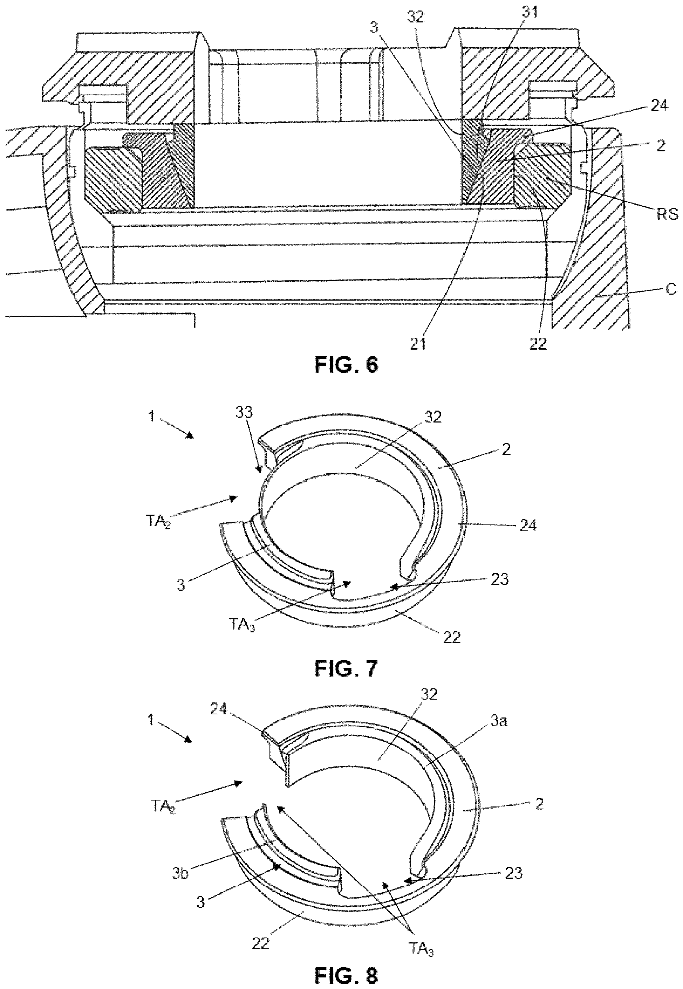

The invention is now disclosed by reference to Figs. 6-8, showing a preferred embodiment of bicycle compression ring assembly (1).

In particular, Figs. 6 and 7 show a first embodiment of bicycle compression ring assembly (1) respectively mounted and dismounted. The assembly (1) comprises an outer ring (2) and an inner ring (3). Both rings (2, 3) are open, that is, they do not have a complete closed circumference, but they have corresponding open lengths (TA₂, TA₃). Specifically, the outer ring (2) comprises an open length (TA₂) and the inner ring (3) comprises an open length (TA₃). These open lengths allow the ring (2, 3) in question to slightly increase or reduce their diameter when they are introduced in their positions in the direction of the bicycle.

The outer ring (2) has a radially inner wall (21) having a conical shape and a radially outer wall (22) having a cylindrical shape. The cylindrical outer wall (22) has a diameter configured to fit into the inner race of the upper bearing (RS) of the direction of the bicycle. In addition to these two walls (21, 22), the outer ring (2) also has a flange (24) provided at the upper wall that protrudes radially outwards with respect to the outer wall (22). When the assembly (1) is installed, this flange (24) abuts against the upper side in the axial direction of the bearing (RS), thereby preventing the assembly (1) formed by the two compression rings (2, 3) from moving downwardly when the pre-charge is applied.

The inner ring (3) has a radially outer wall (31) having a conical shape and a radially inner wall (32) having a cylindrical shape. The cylindrical inner wall (32) has a diameter configured to fit on the fork tube (H, not shown in Fig. 6).

The conical walls (21, 31) respectively of the outer ring (2) and the inner ring (3) are configured to fit one with the other. Specifically, the conical walls (21, 31) increase in diameter longitudinally in an upward direction. Thus, the inner ring (3) can be longitudinally lowered for introduction into the outer ring (2) and, once both conical walls (21, 31) are in contact, by applying a longitudinally downwards force the inner ring (3) is firmly fitted into the outer ring (2). The result is that the inner ring (3) pushes the outer ring (2) radially outwards, thereby compressing it against the inner race of the upper bearing (2). Indeed, since the inner ring (3) has its inner wall (32) abutted against the fork tube (H, not shown in Fig. 6), its diameter cannot be reduced despite the open length (TA₃). Therefore, when moving downwards its conical outer wall (31) slides against the inner conical wall (21) of the outer ring (2), pushing said outer ring (2) radially outwards. Thereto, normally the angle of conicity of both conical walls (21, 31) is essentially the same.

This configuration substantially increases the contact surface between the compression ring assembly (1) as a whole and the upper bearing (RS). Also, the contact surface between both rings (2, 3) is much higher in comparison with the mere 2 millimetres of contact of the prior art. Thereby, the present solution allows for a safer and more rigid solution.

Both rings (2, 3) also have respective recesses (23, 33) allowing for the passage of cables towards the inside of the fork tube (H). Specifically, the inner wall (21) of the outer ring (2) comprises a first recess (23) of reduced thickness and the outer wall (31) of the inner ring (3) comprises a second recess (33) of reduced thickness. That is, the two rings (2, 3) have in said recesses (23, 33) a reduced thickness thanks to a hole in their respectively inner (21) and outer (31) walls.

Thanks to this configuration, if the position of the recess (23, 33) of one of the rings (2, 3) is made to match the position of the open length (TA₂, TA₃) of the other ring (2, 3), a wider opening for the passage of cables is obtained. This configuration is shown in Fig. 7, where the first recess (23) of the outer ring (2) matches the position of the open length (TA₃) of the inner ring (3) and, additionally, the second recess (33) of the inner ring (3) matches the position of the open length (TA₂) of the outer ring (2). In this particular embodiment, the radial extension of the first recess (23) matches the radial extension of the open length (TA₃) and the radial extension of the second recess (33) matches the radial extension of the open length (TA₂).

The installation of a compression ring assembly (1) according to this first embodiment of the upper bearing (RS) of the direction of a bicycle would take places as follows.

First, the outer ring (2) is introduced into the bearing (RS) such that the cylindrical outer wall (22) of the outer ring (2) makes contact with, or is at least adjacent to, the inner race of the bearing (RS). Next, the inner ring (3) is introduced into the outer ring (2) by displacing it longitudinally downwards according to the position shown in Fig. 6. Once introduced, the conical outer wall (31) of said inner ring (3) makes contact with the conical inner wall (21) of the outer ring (2). Last, the inner ring (3) is pushed downwards according to the position shown in Fig. 6. The pushing force, or pre-charge, can be applied directly onto the inner ring (3), or else indirectly by compressing the direction assembly in a known manner. In any case, the effect of said longitudinal force tending to introduce the inner ring (3) into the outer ring (2) is such that the conical surfaces (21, 31) slide one over the other and, since the diameter of the inner ring (3) is fixed by the fork tube (H), the outer ring (2) slightly increases in diameter, radially pushing against the inner race of the upper bearing (RS). The result is that the fork tube (H), the two compression rings (2, 3) and the bearing (RS) are joined in a block lacking any play.

Fig. 8 shows a second preferred embodiment of the compression ring assembly (1) also formed by an outer ring (2) that is essentially the same as in the previous preferred embodiment and an inner ring (3) that, in this case, is divided into two physically separate portions: a first portion (3a) and a second portion (3b).

The first portion (3a) has a radial extension that is larger than the second portion (3b), in this example of about 180°, and both the inner wall (31) and the outer wall (32) of said first portion (3a) are cylindrical. In consequence, the length of the inner wall (21) of the outer ring (2) where this first portion (3a) of the inner ring (3) fits is also cylindrical.

On the other hand, the second portion (3b) has a shorter radial extension, in this example of about 40°-60°. The inner wall (32) of the second portion (3b) is cylindrical, while the outer wall (31) of the second portion (3b) is conical. In consequence, the length of the inner wall (21) of the outer ring (2) where this second portion (3b) of the inner ring (3) fits is also conical.

This configuration functions in essentially the same manner as the preferred embodiment disclosed above. First, the outer ring (2) is introduced in a similar manner as disclosed above. Next, the first portion (3a) of the inner ring (3) is introduced such that its cylindrical outer wall (31) matches the position of the cylindrical length of the inner wall (21) of the outer ring (2). When both elements make contact through parallel cylindrical walls, the first portion (3a) of the inner ring (3) easily enters completely into the outer ring (2). The second portion (3b) of the inner ring (3) is then introduced in the position where its conical outer wall (31) matches the position of the conical length of the inner wall (21) of the outer ring (2). This second portion (3b) of inner ring (3) is pushed in the longitudinal direction (vertically downwards taking into account the position of Fig. 8) to cause its conical outer wall (31) to act as a wedge for compressing the outer ring (2) against the bearing (RS).

## Claims

1. Bicycle compression ring assembly (1) configured to connect a bearing (RS) of the direction of a bicycle between the fork tube (H) and the frame (C), comprising:
- an outer ring (2) comprising an inner wall (21) and an outer wall (22), where said inner wall (21) comprises at least a conical length and said outer wall (22) comprises a cylindrical wall configured to abut against an inner race of the bearing (RS) of the direction of the bicycle;
- an open inner ring (3) comprising an outer wall (31) and an inner wall (32), where said outer wall (31) comprises at least a conical length and said inner wall (32) comprises a cylindrical wall configured to abut against an outer surface of the fork tube (H),
where the conical length of the outer wall (31) of the inner ring (3) and the conical length of the inner wall (21) of the outer ring (2) have essentially the same conicity such that, when the assembly (1) is mounted, the inner ring (3) fits into the outer ring (2) in a wedge-like manner and compresses it against the bearing (RS),
**characterized in that**
the outer ring (2) is an open outer ring (2) comprising an open circumferential length (TA₂) allowing for its diameter to slightly change for suitably fitting in position.

2. Bicycle compression ring assembly (1) according to claim 1, where the angle of conicity of the conical length of the inner wall (21) of the outer ring (2) and of the conical length of the outer wall (31) of the inner ring (3) is between 20° and 30°.

3. Bicycle compression ring assembly (1) according to any of the previous claims, where the inner ring (3) is divided into a first portion (3a) and a second portion (3) physically separate and configured to be installed in diametrically opposed positions.

4. Bicycle compression ring assembly (1) according to claim 3, where the outer wall (31) of the first portion (3a) of the inner ring (3) is cylindrical and the inner wall (21) of the length of the outer ring (2) where said first portion (3a) of the inner ring (3) fits is also cylindrical.

5. Bicycle compression ring assembly (1) according to any of claims 3-4, where the outer wall (31) of the second portion (3b) of the inner ring (3) is conical and the inner wall (21) of the length of the outer ring (2) where said second portion (3a) fits is also conical.

6. Bicycle compression ring assembly (1) according to any of the previous claims, where the inner wall (21) of the outer ring (2) comprises a first recess (23) having a reduced thickness configured to allow for the passage of cables towards the inside of the fork tube (H).

7. Bicycle compression ring assembly (1) according to any of the previous claims, where the outer wall (31) of the inner ring (3) comprises a second recess (33) having a reduced thickness and configured to allow for the passage of cables towards the inside of the fork tube (H).

8. Bicycle compression ring assembly (1) according to claim 7 when the latter is dependent on claim 6, where the second recess (33) of the inner ring (3) and the first recess (23) of the outer ring (2) are provided in radial positions configured to match respectively with the radial position of the open length (TA₂) of the outer ring (2) and with the radial position of an open length (TA₃) of the inner ring (3).

9. Bicycle compression ring assembly (1) according to claim 8, where the second recess (33) of the inner ring (3) and the first recess (23) of the outer ring (2) have radial extensions that respectively match the radial extension of the open length (TA₂) of the outer ring (2) and the radial extension of the open length (TA₃) of the inner ring (3).

10. Method for installing a bicycle compression ring assembly (1) according to any of the previous claims, the method comprising the following steps:
- fitting the outer ring (2) within the bearing (RS) such that the cylindrical outer wall (22) of the outer ring (2) makes contact with the inner race of the bearing (RS);
- introducing the inner ring (3) inside the outer ring (2) in a longitudinal direction, such that the conical outer wall (31) of said inner ring (3) abuts against the conical inner wall (21) of the outer ring (2); and
- applying a pre-charge in the longitudinal direction, such that said inner ring (3) is introduced further into the outer ring (2) and the sliding of the conical outer surface (31) of the inner ring (3) against the conical inner surface (21) of the outer ring causes a radially outward oriented force that compresses the outer ring (2) against the inner race of the bearing (RS).

11. Method according to claim 10 in which the bicycle compression ring assembly (1) is according to any of claims 8 or 9, comprising the step of making the position of the second recess (33) of the inner ring (3) match with the open length (TA₂) of the outer ring (2) and the position of the first recess (23) of the outer ring (2) match with the open length (TA₃) of the inner ring (3).

## Patentansprüche

1. Fahrrad-Kompressionsringanordnung (1), die so gestaltet ist, dass sie ein Lager (RS) der Richtung eines Fahrrads zwischen dem Gabelrohr (H) und dem Rahmen (C) verbindet, welche Folgendes umfasst:
- einen Außenring (2), der eine Innenwand (21) und eine Außenwand (22) umfasst, wobei die Innenwand (21) mindestens eine konische Länge umfasst und die Außenwand (22) eine zylindrische Wand umfasst, die so gestaltet ist, dass sie an einem Innenring des Lagers (RS) in der Richtung des Fahrrads anliegt;
- einen offenen Innenring (3), der eine Außenwand (31) und eine Innenwand (32) umfasst, wobei die Außenwand (31) mindestens eine konische Länge umfasst und die Innenwand (32) eine zylindrische Wand umfasst, die so gestaltet ist, dass sie an einer Außenfläche des Gabelrohrs (H) anliegt,
wobei die konische Länge der Außenwand (31) des Innenrings (3) und die konische Länge der Innenwand (21) des Außenrings (2) im Wesentlichen die gleiche Konizität aufweisen, so dass sich der Innenring (3) im montierten Zustand der Anordnung (1) keilartig in den Außenring (2) einfügt und diesen gegen das Lager (RS) drückt, **dadurch gekennzeichnet, dass**
der Außenring (2) ein offener Außenring (2) ist, der eine offene Umfangslänge (TA₂) umfasst, die es ermöglicht, dass sich sein Durchmesser geringfügig ändert, um ihn in geeigneter Weise einzupassen.

2. Fahrrad-Kompressionsringanordnung (1) nach Anspruch 1, wobei der Konizitätswinkel der konischen Länge der Innenwand (21) des Außenrings (2) und der konischen Länge der Außenwand (31) des Innenrings (3) zwischen 20° und 30° liegt°.

3. Fahrrad-Kompressionsringanordnung (1) nach einem der vorhergehenden Ansprüche, wobei der Innenring (3) in einen ersten Abschnitt (3a) und einen zweiten Abschnitt (3) unterteilt ist, die physisch getrennt und so gestaltet sind, dass sie in diametral gegenüberliegenden Positionen installiert werden können.

4. Fahrrad-Kompressionsringanordnung (1) nach Anspruch 3, wobei die Außenwand (31) des ersten Abschnitts (3a) des Innenrings (3) zylindrisch ist und die Innenwand (21) der Länge des Außenrings (2), in die der erste Abschnitt (3a) des Innenrings (3) passt, ebenfalls zylindrisch ist.

5. Fahrrad-Kompressionsringanordnung (1) nach einem der Ansprüche 3 bis 4, wobei die Außenwand (31) des zweiten Abschnitts (3b) des Innenrings (3) konisch ist und die Innenwand (21) der Länge des Außenrings (2), in die der zweite Abschnitt (3a) passt, ebenfalls konisch ist.

6. Fahrrad-Kompressionsringanordnung (1) nach einem der vorhergehenden Ansprüche, wobei die Innenwand (21) des Außenrings (2) eine erste Aussparung (23) umfasst, die eine reduzierte Dicke aufweist, die so gestaltet ist, dass sie den Durchgang von Kabeln ins Innere des Gabelrohrs (H) ermöglicht.

7. Fahrrad-Kompressionsringanordnung (1) nach einem der vorhergehenden Ansprüche, wobei die Außenwand (31) des Innenrings (3) eine zweite Aussparung (33) umfasst, die eine reduzierte Dicke aufweist, die so gestaltet ist, dass sie den Durchgang von Kabeln ins Innere des Gabelrohrs (H) ermöglicht.

8. Fahrrad-Kompressionsringanordnung (1) nach Anspruch 7, wenn dieser von Anspruch 6 abhängt, wobei die zweite Aussparung (33) des Innenrings (3) und die erste Aussparung (23) des Außenrings (2) in radialen Positionen vorgesehen sind, die so gestaltet sind, dass sie der radialen Position der offenen Länge (TA₂) des Außenrings (2) bzw. der radialen Position einer offenen Länge (TA₃) des Innenrings (3) entsprechen.

9. Fahrrad-Kompressionsringanordnung (1) nach Anspruch 8, wobei die zweite Aussparung (33) des Innenrings (3) und die erste Aussparung (23) des Außenrings (2) radiale Erstreckungen aufweisen, die der radialen Erstreckung der offenen Länge (TA₂) des Außenrings (2) bzw. der radialen Erstreckung der offenen Länge (TA₃) des Innenrings (3) entsprechen.

10. Verfahren zur Montage einer Fahrrad-Kompressionsringanordnung (1) nach einem der vorhergehenden Ansprüche, wobei das Verfahren die folgenden Schritte umfasst:
- Einsetzen des Außenrings (2) in das Lager (RS), so dass die zylindrische Außenwand (22) des Außenrings (2) in Kontakt mit dem Innenring des Lagers (RS) kommt;
- Einführen des Innenrings (3) in den Außenring (2) in einer Längsrichtung, so dass die konische Außenwand (31) des Innenrings (3) an der konischen Innenwand (21) des Außenrings (2) anliegt; und
- Anlegen einer Vorspannung in der Längsrichtung, so dass der Innenring (3) weiter in den Außenring (2) eingeführt wird und das Gleiten der konischen Außenfläche (31) des Innenrings (3) gegen die konische Innenfläche (21) des Außenrings eine radial nach außen gerichtete Kraft bewirkt, die den Außenring (2) gegen den Innenring des Lagers (RS) drückt.

11. Verfahren nach Anspruch 10, bei dem die Fahrrad-Kompressionsringanordnung (1) einem der Ansprüche 8 oder 9 entspricht, die den Schritt umfasst, die Position der zweiten Aussparung (33) des Innenrings (3) mit der offenen Länge (TA₂) des Außenrings (2) und die Position der ersten Aussparung (23) des Außenrings (2) mit der offenen Länge (TA₃) des Innenrings (3) in Übereinstimmung zu bringen.

## Revendications

1. Ensemble de bague de compression (1) de vélo servant à connecter un roulement (RS) de la direction d'un vélo entre le pivot de fourche (H) et le châssis (C), comprenant :
- une bague extérieure (2) comprenant une paroi intérieure (21) et une paroi extérieure (22), où ladite paroi intérieure (21) comprend au moins une longueur conique et ladite paroi extérieure (22) comprend une paroi cylindrique configurée pour venir en appui contre une bague intérieure du roulement (RS) de la direction d'un vélo
- une bague ouverte intérieure (3) comprenant une paroi extérieure (31) et une paroi intérieure (32), où ladite paroi extérieure (31) comprend au moins une longueur conique et ladite paroi intérieure (32) comprend une paroi cylindrique configurée pour venir en appui contre une surface extérieure du pivot de fourche (H),
où la longueur conique de la paroi extérieure (31) de la bague intérieure (3) et la longueur conique de la paroi intérieure (21) de la bague extérieure (2) a pratiquement la même conicité, de sorte que lorsque l'ensemble (1) est monté, la bague intérieure (3) s'ajuste dans la bague extérieure (2) comme un coin et le comprime contre le roulement (RS),
**caractérisé par le fait que**
la bague extérieure (2) est une bague extérieure ouverte (2) comprenant une longueur de circonférence ouverte (TA₂) permettant à ce diamètre de se modifier légèrement pour assurer un ajustement approprié dans la position.

2. Ensemble de bague de compression pour vélo (1) conformément à la revendication 1, où l'angle de conicité de la longueur conique de la paroi intérieure (21) de la bague extérieure (2) et de la longueur conique de la paroi extérieure (31) de la bague intérieure (3) est compris entre 20º et 30º.

3. Ensemble de bague de compression de vélo (1) conformément à l'une quelconque des revendications précédentes, où la bague intérieure (3) est divisée en une première portion (3a) et une deuxième portion (3) physiquement séparées et configurées pour être installées dans des positions diamétralement opposées.

4. Ensemble de bague de compression pour vélo (1) conformément à la revendication 3 où la paroi extérieure (31) de la première portion (3a) de la bague intérieure (3) est cylindrique et la paroi intérieure (21) de la longueur de la bague extérieure (2) où ladite première portion (3a) de la bague intérieure (3) s'ajuste est également cylindrique.

5. Ensemble de bague de compression pour vélo (1) conformément à l'une des revendications 3-4 où la paroi extérieure (31) de la deuxième portion (3b) de la bague intérieure (3) est conique et la paroi intérieure (21) de la longueur de la bague extérieure (2) où ladite deuxième portion (3b) s'ajuste est également conique.

6. Ensemble de bague de compression de vélo (1) conformément à l'une des revendications précédentes quelconque, où la paroi intérieure (21) de la bague extérieure (2) comprend une première encoche (23) d'une épaisseur réduite configurée pour permettre le passage des câbles vers la partie intérieure du pivot de fourche (H).

7. Ensemble de bague de compression de vélo (1) conformément à l'une des revendications précédentes quelconque, où la paroi extérieure (31) de la bague intérieure (3) comprend une deuxième encoche (33) d'une épaisseur réduite configurée pour permettre le passage des câbles vers la partie intérieure du pivot de fourche (H).

8. Ensemble de bague de compression de vélo (1) conformément à la revendication 7 où la dernière dépend de la revendication 6, où la deuxième encoche (33) de la bague intérieure (3) et la première encoche (23) de la bague extérieure (2) sont disposées dans des positions radiales configurées pour correspondre respectivement avec la position radiale de la longueur ouverte (TA₂) de la bague extérieure (2) et avec la position radiale d'une longueur ouverte (TA₃) de la bague intérieure (3).

9. Ensemble de bague de compression de vélo (1) conformément à la revendication 8 où la deuxième encoche (33) de la bague intérieure (3) et la première encoche (23) de la bague extérieure (2) ont des extensions radiales qui correspondent respectivement à l'extension radiale de la longueur ouverte (TA₂) de la bague extérieure (2) et avec l'extension radiale de la longueur ouverte (TA₃) de la bague intérieure (3).

10. Méthode pour installer un ensemble de bague de compression de vélo (1) conformément à l'une des revendications précédentes, la méthode comprenant les étapes suivantes :
- installer la bague extérieure (2) dans le roulement (RS) de sorte que la paroi extérieure cylindrique (22)) de la bague extérieure (2) entre en contact avec la course interne du roulement (RS) ;
- introduire la bague intérieure (3) à l'intérieur de la bague extérieure (2) dans un sens longitudinal, de telle sorte que la paroi extérieure conique (31) de ladite bague intérieure (3) butte contre la paroi intérieure conique (21) de la bague extérieure (2) ; et
- appliquer une précharge dans le sens longitudinal, de sorte que ladite bague intérieure (3) est introduite plus loin dans la bague extérieure (2) et le glissement de la surface extérieure conique (31) de la bague intérieure (3) contre la surface intérieure conique (21) de la bague extérieure entraîne une force orientée vers l'extérieur radialement qui comprime la bague extérieure (2) contre la course intérieure du roulement (RS).

11. Méthode conformément à la revendication 10, dans laquelle l'ensemble de la bague de compression de vélo (1) est conforme à l'une des revendications 8 ou 9, comprenant l'étape de faire en sorte que la position de la deuxième encoche (33) de la bague intérieure (3) corresponde à la longueur ouverte (TA₂) de la bague extérieure (2) et que la position de la première encoche (23) de la bague extérieure (2) corresponde à la longueur ouverte (TA₃) de la bague intérieure (3).
